# EUROPÄISCHE PATENTSCHRIFT

(11) **EP 0 549 656 B1**
(45) Veröffentlichungstag und Bekanntmachung des Hinweises auf die Patenterteilung: **14.12.1994**
(21) Anmeldenummer: 91916661.1
(22) Anmeldetag: 20.09.1991
(51) Int. Cl.: B22F 1/00

(54) **VERFAHREN UND ANLAGE ZUM REDUKTIONSGLÜHEN VON EISENPULVER**
PROCESS AND DEVICE FOR THE REDUCTION ANNEALING OF POWDERED IRON
PROCEDE ET INSTALLATION DE RECUIT DE FER EN POUDRE PAR REDUCTION

(30) Priorität: 20.09.1990 DE 4030054
(43) Veröffentlichungstag der Anmeldung: 07.07.1993
(73) Patentinhaber: MANNESMANN Aktiengesellschaft, 40027 Düsseldorf (DE)
(72) Erfinder: JOHNEN, Dieter, D-5160 Düren-Gürzenich (DE); LINNEMANN, Viktor, D-4050 Mönchengladbach 1 (DE); HUBER, Georg, D-4050 Mönchengladbach (DE); ISCHEBECK, Friedrich, W., D-5140 Erkelenz (DE)
(74) Vertreter: Meissner, Peter E., Dipl.-Ing.
(86) Internationale Anmeldenummer: DE9100757
(87) Internationale Veröffentlichungsnummer: WO9205001

(56) Entgegenhaltungen:
- DE-A- 3 439 717
- DE-C- 722 956
- US-A- 205 986
- WORLD PATENTS INDEX Derwent Publications Ltd. London, GB AN 73-3113OU

## Beschreibung

Die Erfindung betrifft ein Verfahren zum Reduktionsglühen von Eisenpulver, welches durch Wasserverdüsung einer Eisenschmelze entstanden ist, gemäß dem Oberbegriff des Patentanspruchs 1 und eine Anlage zur Durchführung des Verfahrens.

Es ist bekannt, Eisenschmelzen mit Hilfe von Gas- oder Wasserstrahlen, die unter hohem Druck auf einen Gießstrahl der Schmelze gerichtet werden, in kleine Schmelzenpartikel zu zerstäuben, so daß infolge der dabei stattfindenden raschen Abkühlung der Schmelzenpartikel ein feinteiliges Eisenpulver entsteht. Soweit das verwendete Zerstäubungsmedium nicht sauerstoffrei ist (z.B. Wasser) und die Zerstäubung nicht in inerter Atmosphäre durchgeführt wird, bildet sich auf den einzelnen Eisenpartikeln eine Oxidhaut, die für die Weiterverarbeitung des Eisenpulvers z. B. in der Sintermetallurgie ein Hindernis darstellt. Außerdem besteht ein Verarbeitungshindernis für viele Anwendungen in der vorliegenden Aufhartung der Eisenpartikel, die trotz eines geringen Kohlenstoffgehaltes wegen der extrem schnellen Abkühlung stattfindet.

Zur Beseitigung dieser Hindernisse ist es üblich (z.B. DE 37 22 956 C1), das aus der Schmelzenzerstäubung erhaltene oxidierte Eisenpulver einer Glühbehandlung in reduzierender Atmosphäre zu unterziehen. Hierzu werden Durchlauföfen wie z.B. Bandöfen (vgl. US 4 448 746), Hubbalkenöfen oder Rollenherdöfen eingesetzt. Das Eisenpulver verbleibt dabei z.B. auf einer schalenförmigen Unterlage in einer losen Schüttung im Glühofen bei Temperaturen von 900-1200°C (im beheizten Ofenmantel), in der Regel von über 950°C. Zur Reduktion wird meistens eine mit Wasserstoff angereicherte Ofenatmosphäre verwendet. Es ist aus der DE 37 22 956 C1 auch bekannt, den Verbrauch von Wasserstoff durch Einbringung von Kohlenwasserstoffen (z.B. Erdgas) in den Ofen zu vermindern, indem der Effekt einer Dampfreformierung der Kohlenwasserstoffe ausgenutzt wird.

Die Verweilzeit des Eisenpulvers im Ofen richtet sich einerseits nach seinem anfänglichen und nach dem gewünschten Endsauerstoffgehalt, also nach der erforderlichen Reduktionsarbeit, und andererseits nach den Randbedingungen für die Reduktion, d.h. insbesondere nach der Schütthöhe des Eisenpulvers, der Intensität des Gasaustauschs und der Reduktionstemperatur. Wesentlich ist, daß der zur Reduktion benötigte Wasserstoff die Pulverschüttung vollständig durchdringen und der bei der Reduktion gebildete Wasserdampf aus der Pulverschüttung und der Ofenatmosphäre austreten kann. Glühzeiten von 1 bis 2 Stunden Dauer sind als üblich anzusehen. Nach der Glühung weist das Eisenpulver nur noch einen geringen Restsauerstoffgehalt von z.B. weniger als 0,2 Gewichts-% und ein weichgeglühtes Gefüge auf.

Als nachteilig bei der bekannten Eisenpulverreduktion ist es anzusehen, daß der Reduktionsprozeß sehr energieaufwendig und im Hinblick auf den Wasserstoffverbrauch kostenträchtig ist. Die langen Verweilzeiten beeinträchtigen den Ofendurchsatz. Außerdem bildet sich durch ein Zusammenbacken von Primärpulverteilchen ein "Eisenpulverkuchen", der durch eine anschließende Mahlbehandlung wieder weitgehend aufgelöst werden muß.

Ferner ist es bekannt, eine Direktreduktion von Eisenoxiden in einem Drehrohrofen vorzunehmen. Unter einem Drehrohrofen wird im allgemeinen ein Ofen mit rohrförmigem Behandlungsraum verstanden, der direkt befeuert und während des Einsatzes ständig gedreht wird. Das Einsatzmaterial durchläuft den Drehrohrofen kontinuierlich. Bei der Direktreduktion von Eisenoxiden kommen als Einsatzmaterialien Stückerze und Eisenerzpellets in Frage. Dabei kann auch ein relativ geringer Feinanteil mitverarbeitet werden. Ausgesprochen pulverförmige Eisenerze können jedoch nicht verwendet werden.

Im Unterschied zum Drehrohrofen wird ein kontinuierlich arbeitender Ofen mit sich drehendem zylinderförmigem Behandlungsraumraum, der indirekt beheizt wird, im allgemeinen als Trommelofen bezeichnet.

Aus der DE 34 39 717 A1 ist die Verwendung eines solchen Trommelofens zur Erzeugung von pulverförmigem Wolfram oder Molybdän durch Kalzinieren von Ammoniumparawolframat bzw. Ammoniummolybdat bekannt, wobei Wolframoxid bzw. Molybdänoxid anfällt. Diese Oxide werden dann mit Wasserstoff zu entsprechenden pulverförmigen Metallen reduziert. Eine Reduktion von wasserverdüstem Eisenpulver in einem Trommelofen ist bisher nicht bekannt geworden. Da Eisenpulver (insbesondere wasserverdüstes Eisenpulver) zu starker Agglomeration neigt, mußte ein Trommelofen von einem Fachmann von vornherein als ungeeignet für die Reduktion von Eisenpulver angesehen werden. Es wäre nämlich zu erwarten gewesen, daß die Bildung von Eisenklumpen (infolge der spratzigen Kornform des Pulvers) den Ofenbetrieb in (unzulässiger Weise gestört und eine ausreichende und gleichmäßige Pulverreduktion verhindert hätte. Außerdem wäre ein ständiger Austrag von Feinanteilen des Eisenpulvers in Zusammenhang mit dem erforderlichen Gasaustausch zur Erneuerung der Ofenatmosphäre zu befürchten gewesen, der die Ausbeute des Prozesses gesenkt und die Wirtschaftlichkeit beeinträchtigt hätte.

Aufgabe der Erfindung ist es, für die Reduktions- und Weichglühbehandlung von wasserverdüstem Eisenpulver ein Verfahren anzugeben, das die vorstehend geschilderten Nachteile weitgehend vermeidet und insbesondere gegenüber den bisherigen Glühverfahren schneller und mit weniger Energie- und Reduktionsmittelaufwand durchführbar ist. Außerdem soll eine Vorrichtung zur Durchführung dieses Verfahrens vorgeschlagen werden.

Gelöst wird diese Aufgabe hinsichtlich des gattungsgemäßen Verfahrens mit den kennzeichnenden Merkmalen des Patentanspruchs 1; vorteilhafte Weiterbildungen dieses Verfahrens sind in den Unteransprüchen 2 bis 11 angegeben. Eine Vorrichtung zur Durchführung der Erfindung weist die Merkmale des Patentanspruchs 12 auf und ist durch die Merkmale der Unteransprüche 13 bis 27 in vorteilhafter Weise ausgestaltbar.

Das Wesen der Erfindung liegt nicht etwa nur darin, daß sie die Anwendung eines für die Reduktion anderer Materialien an sich bereits bekannten Verfahrensprinzips, bei dem das pulverförmige Behandlungsgut während der Behandlung ständig umgewälzt wird, auf ein wasserverdüstes Eisenpulver vorsieht. Vielmehr schafft sie erst die Voraussetzungen für die Nutzung dieses Prinzips, das bisher wegen der extremen Agglomerationsneigung dieses Eisenpulvers praktisch nicht anwendbar erschien, indem sie neben der intensiven Durchmischung des Eisenpulvers zumindest in der Reduktionszone gleichzeitig für die Reduktionszone auch eine Beschränkung der Glühtemperatur auf Werte zwischen 800 und 950°C sowie die unmittelbare Einleitung von frischem Reduktionsgas zur örtlich gezielten Steuerung des Taupunktes in der Ofenatmosphäre der Reduktionszone vorschreibt.

Bei den herkömmlichen Reduktionsverfahren wird das frische Reduktionsgas im Regelfall am Austragsende des Glühofens im Gegenstrom zum Eisenpulver eingeleitet, während die Brüden an der Beschickungsseite des Glühofens abgezogen werden. Dabei wird keine gezielte Beeinflussung der Ofenatmosphäre innerhalb der Reduktionszone vorgenommen. Das hat zur Folge, daß die Eisenpulverteilchen abhängig von ihrer Höhenlage innerhalb der unbewegten Eisenpulverschüttung mit Reduktionsgas von unterschiedlichem Wassergehalt in Kontakt gebracht werden, da sich das Reduktionsgas infolge der ablaufenden Reduktionsvorgänge stets weiter mit Wasserdampf anreichert und daher gegenüber dem ursprünglichen frischen Reduktionsgas einen ständig steigenden Taupunkt aufweist. Gemäß der Erfindung kann durch die gezielte Zufuhr von frischem Reduktionsgas in die Reduktionszone der Taupunkt der Ofenatmosphäre örtlich auf einem gewünschten Niveau gehalten werden. Infolge der ständigen Umwälzung und Durchmischung des Eisenpulvers erhalten praktisch alle Eisenpulverteilchen die Möglichkeit, mit einem Reduktiansgas in Kontakt zu treten, dessen Taupunkt gemessen an den tiefer gelegenen Schichten der statischen Pulverschüttung bei den herkömmlichen Glühverfahren auf einem erheblich niedrigeren Niveau liegt. Dadurch ist es möglich, die Reduktionstemperatur gegenüber dem bisherigen Stand der Technik je nach Materialqualität deutlich abzusenken, ohne dabei Nachteile hinsichtlich des verbleibenden Restsauerstoffgehaltes des Eisenpulvers oder der erforderlichen Glühzeiten hinnehmen zu müssen. Die erfindungsgemäße Merkmalskombination führte zu dem überraschenden Ergebnis, daß der an sich zu erwartende Effekt einer Verklumpung des Eisenpulvers während der Glühbehandlung verhindert bzw. auf einem leicht beherrschbaren Niveau gehalten werden konnte.

Dies konnte durch die Erfindung erreicht werden, ohne daß pulverförmige Zusatzstoffe wie Calciumoxid, Calciumfluorid, Magnesiumoxid, Natriumkarbonat, Titandioxid oder ähnliche Stoffe mit dem in einem Trommelofen zu reduzierenden Eisenpulver vermischt werden müssen, wie dies aus der DE-C 29 21 786 bekannt ist. Nach dem dort beschriebenen Verfahren wird kein wasserverdüstes Eisenpulver, sondern ein zerkleinertes (gemahlenes) Eisenoxidpulver als Rohmaterial eingesetzt, wobei zur Vermeidung der Agglomeratbildung 5 - 30 Gewichts-% dieser pulverförmigen Zusatzstoffe zugemischt werden. Nach der durchgeführten Reduktion müssen die Zusatzstoffe in einem zusätzlichen Arbeitsgang wieder abgetrennt werden. Im Vergleich hierzu stellt das erfindungsgemäße Verfahren eine erheblich einfachere und kostengünstigere Vorgehensweise dar.

Diese Aussage gilt sinngemäß auch für den Vergleich mit dem aus der DE-A 27 31 845 bekannten Reduktionsverfahren für Metallpulver, das ebenfalls in einem Trommelofen durchgeführt wird. Dieses bekannte Verfahren sieht vor, das Metallpulver zunächst mit organischen Stoffen wie Dextrosen, Stärke, organischen Säuren, Ölen, Alkoholen, Wachsen oder Fetten und deren Derivaten zu vermischen und erst danach zu reduzieren. Dabei wird zusätzlich empfohlen, das Metallpulver vor der Behandlung im Reduktionsofen durch einen Preßvorgang stückig, also extrem grobkörnig zu machen (z.B. 8 mm Korngröße). Bei dem erfindungsgemäßen Verfahren sind derartige Maßnahmen, d.h. insbesondere die Zumischung pulverförmiger oder flüssiger Zusatzstoffe zu dem zu behandelnden Eisenpulver entbehrlich.

Anhand der schematischen Darstellung der Figuren 1 bis 6 wird die Erfindung nachfolgend näher erläutert.

Es zeigen:
Figur 1 einen Längsschnitt durch einen erfindungsgemäßen Trommelofen
Figur 2 einen Querschnitt gemäß Linie A-A aus Fig. 1
Fig.3+4 verschiedene Einbauten in den Behandlungsraum des Trommelofens
Figur 5 eine Abwandlung des Trommelofens aus Fig. 1
Figur 6 einen Querschnitt gemäß Linie B-B aus Fig. 5.

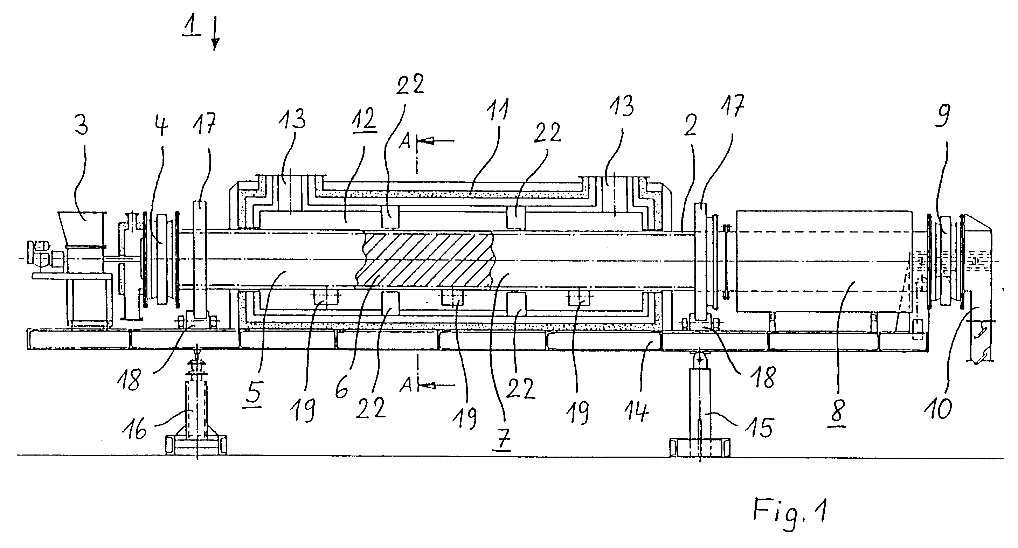

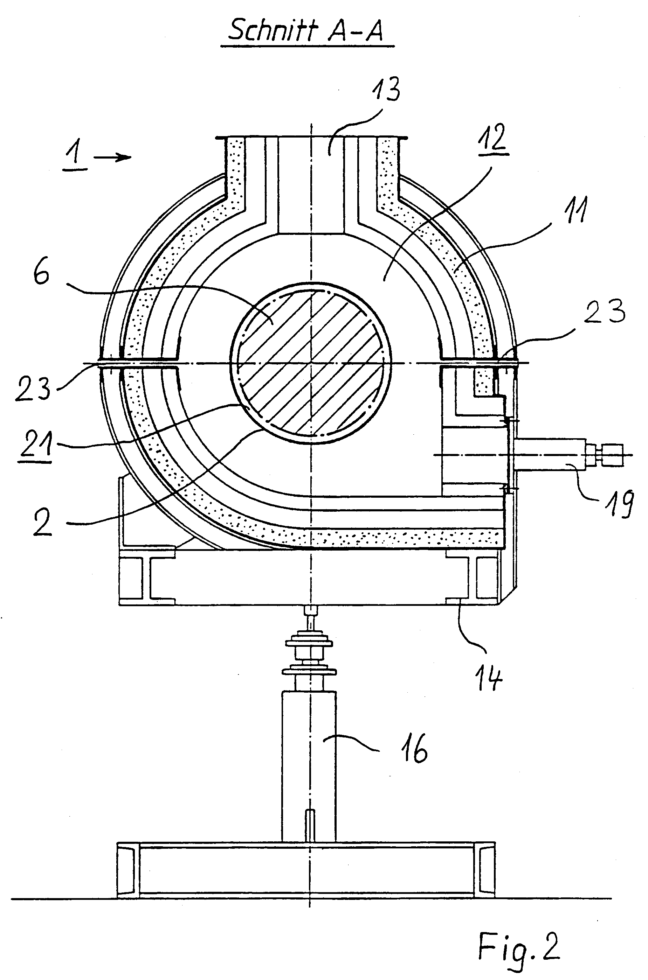

Der in Figur 1 dargestellte Trommelofen 1 zur Reduktion von wasserverdüstem Eisenpulver ist auf einem Tragrahmen 14 aufgebaut. Kern des Trommelofens 1 ist die rohrförmige, drehbare Trommel 2, die den von der äußeren Atmosphäre abgeschirmten Behandlungsraum für das Eisenpulver umgibt. Der Tragrahmen 14 ist auf einer ersten Stütze 15 über ein Drehgelenk mit horizontaler Drehachse und auf einer zweiten höhenverstellbaren Stütze 16 gelagert, so daß die Neigung der Trommel 2 an der Stütze 16 einstellbar ist. Durch die Wahl der Neigung und die Drehzahl der Trommel 2 läßt sich die Verweilzeit des Eisenpulvers in der Trommel 2 unmittelbar beeinflussen. Die Trommel 2 ist über einen Teil ihrer axialen Länge umgeben von einem mit einer thermischen Isolierung versehenen mehrschichtigen Außenmantel 11, der auch den Feuerraum 12 zur indirekten Beheizung der Trommel 2 einschließt. Aus dem Schnittbild gemäß Figur 2 geht hervor, daß der Außenmantel 11 horizontal geteilt ausgeführt und in der Teilungsebene eine Dichtung 23 vorgesehen ist. Die Beheizung erfolgt durch ein oder mehrere Gas- oder ölbrenner 19. Grundsätzlich können auch beliebige andere Warmequellen eingesetzt werden. Die bei der Verbrennung des eingesetzten Brennstoffes entstehenden Abgase werden über die Abgasstutzen 13 nach außen abgeführt. Um eine gezielte Temperatürführung entlang der Achse der Trommel 2 zu erleichtern, können im Feuerraum 12 Stauwände 22 vorgesehen werden, die diesen in mehrere Abschnitte unterteilen.

Um die Trommel 2 motorisch drehen zu können, weist sie außerhalb des Feuerraums 12 und des Außenmantels 11 zwei Trommellaufräder 17 auf, die auf den mit Rollen ausgestatteten und am Tragrahmen 14 befestigten Trommelantrieben 18 laufen. Das in der Trommel 2 zu reduzierende Eisenpulver gelangt über eine Pulveraufgabevorrichtung 3 mittels eines Transportsystems (z.B. eine Förderschnecke) durch die an der linken Stirnseite der Trommel 2 angeordnete Schleuse 4 in das Innere der Trommel 2, also in den Behandlungsraum, der in drei Zonen aufgeteilt ist. Diese drei Zonen sind die Aufheizzone 5 am Beschickungsende des Ofens, die daran anschließende Reduktionszone 7 und die am Austragsende des Ofens angeordnete Kühlzone 8.

Die unmittelbar auf die Schleuse 4 folgende Zone ist als Aufheizzone 5 ausgebildet, erstreckt sich also bis in den Anfangsbereich des beheizten Ofenbereiches hinein. In dieser Aufheizzone 5 wird das eingebrachte Eisenpulver bis auf Reduktionstemperatur (mindestens etwa 800°C, aber max. 950°C) erwärmt. Es ist vorteilhaft, die Erwärmung möglichst schnell durchzuführen. Wesentlich ist, daß die Pulverschüttung bei der Behandlung fortwährend umgewälzt wird. Mindestens in der Reduktionszone 7 muß dabei auch eine wirksame Durchmischung stattfinden. Dies wird durch die ständige Drehung der im Querschnitt nur zu einem relativ kleinen Teil gefüllten Trommel 2 erreicht. Das Umwälzen der Pulverschüttung muß in einer Stärke erfolgen, bei der eine hohe Reibung zwischen den Pulverteilchen erzielt wird. Hierdurch und durch die vergleichsweise niedrigen Ofentemperaturen wird eine Verklumpung des wasserverdüsten Eisenpulvers, das wegen seiner zerklüfteten, spratzigen Kornform eine besonders hohe Neigung zur Agglomeratbildung hat, erheblich vermindert oder sogar ganz verhindert. Die Durchmischung des Eisenpulvers kann durch besondere Einbauten 6, die in den Figuren 1 und 2 nur schematisch angedeutet sind, besonders gefördert werden.

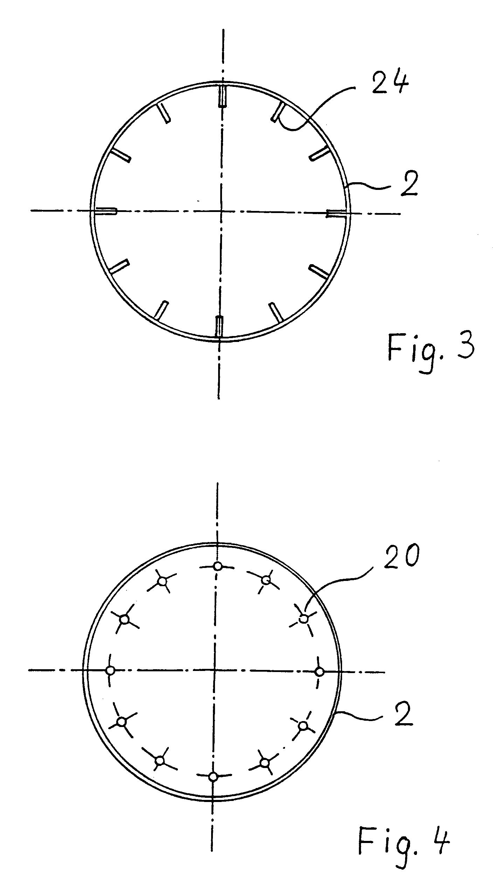

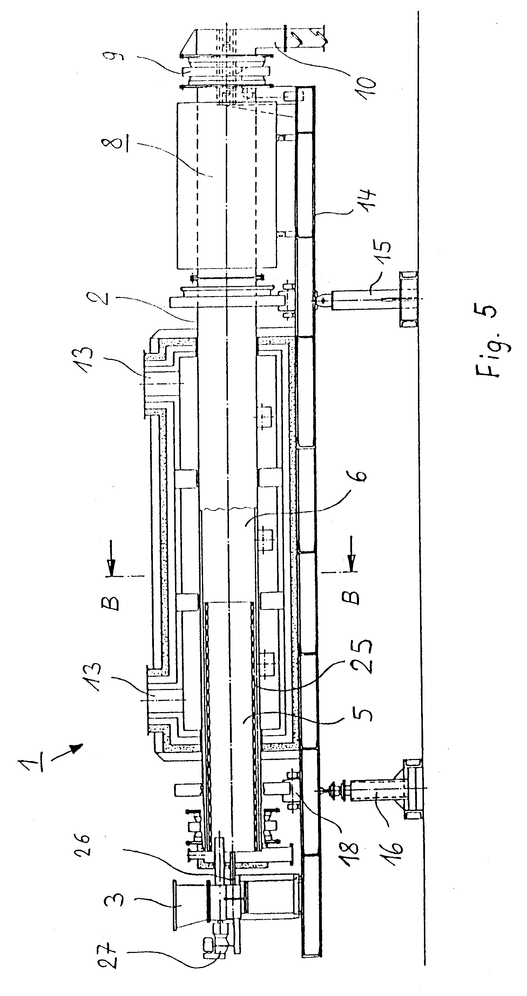

Hierzu eigenen sich beispielsweise Mischleisten 24 (Fig. 3), die auf der Innenoberfläche der Trommel 2 angebracht sind. Es können aber auch unabhängig von der Trommel 2 drehbare Mischleistenkörbe mit oder ohne eigenen Antrieb verwendet werden. Figur 4 zeigt schematisch einen solchen Mischleistenkorb 20, dessen Mischleisten beispielsweise rohrförmig ausgebildet sind.

Es können aber auch andere Mischvorrichtungen wie etwa Förderschnecken oder wendelförmige Einbauten eingesetzt werden, die sich mit oder gegen die (durch die Trommeldrehung bewirkte) Hauptförderrichtung des Eisenpulvers bewegen können. Separat antreibbare Einbauten 6 haben den besonderen Vorteil, daß sie Anbackungen des Eisenpulvers am Innenmantel der Trommel 2 weitestgehend verhindern können. Zur Ablösung etwaiger Anbackungen können aber auch außen am Mantel der Trommel 2 eine oder mehrere Klopfeinrichtungen vorgesehen werden, die in zeitlichen Abständen durch Hammerschläge mechanische Schwingungen im Trommelmantel erzeugen.

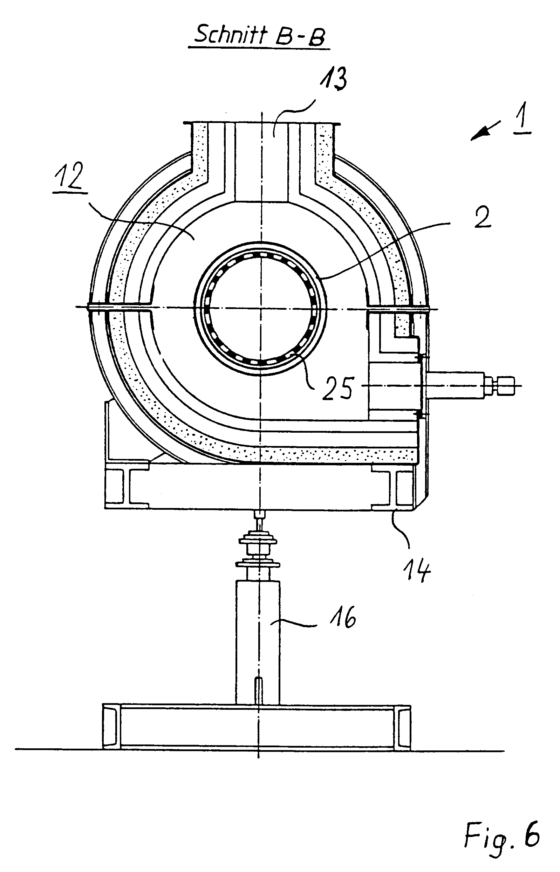

Als besonders vorteilhaft hat es sich erwiesen, wenn die Trommel 2 des Trommelofens 1, wie dies aus den Figuren 5 und 6 hervorgeht, im Bereich ihrer Aufheizzone eine dem Behandlungsraum zugewandte innere siebartige Zwischenschicht aufweist. Versuche haben nämlich ergeben, daß durch Anordnung einer solchen siebartigen Zwischenschicht eng benachbart zur Trommelwandung Anbackeffekte des zu behandelnden Eisenpulvers an der Trommelwandung wesentlich reduziert oder ganz verhindert werden können. Dies hat zur Folge, daß auch Verklumpungseffekte der Pulverteilchen untereinander weitgehend ausgeschaltet werden.

Die siebartige Zwischenschicht ist vorzugsweise als Siebkorb 25 ausgebildet, der bei einer besonders bevorzugten Ausführungsform der Erfindung über ein aus der Trommel 2 an der linken Stirnseite herausgeführtes Gestänge 26 an eine Schwing- bzw. Rütteleinrichtung 27 angeschlossen ist. Als Schwing- bzw. Rütteleinrichtung 27 kann ein üblicher Schwing- bzw. Rüttelmotor verwendet werden, der periodisch betätigt wird, um den im Ofen 1 angeordneten Siebkorb 25 mit Vibrationen zu beaufschlagen und damit eine zusätzliche Maßnahme zur Vermeidung von Anbackungen vorzusehen. Durch das Rütteln wird eine Schabwirkung erzielt, so daß aufgetretene Anbackungen des Eisenpulvers wieder abgelöst werden. Als Siebschicht können beispielsweise geeignete Lochbleche Anwendung finden, durch die die Eisenpulverteilchen leicht hindurchtreten können. Die Maschenweite solcher Lochbleche kann beispielsweise etwa im Bereich von 5-15 mm liegen. Wesentlich ist es, daß die siebartige Zwischenschicht eine zur Aufrechterhaltung des gewünschten Temperaturbereichs im Ofeninneren ausreichende Wärmeübertragung sicherstellt.

Zur Verhinderung von Verklumpungen bzw. zur Auflösung etwaiger Agglomerate können dem zu behandelnden Eisenpulver in vorteilhafter Weiterbildung der Erfindung stückiges Ballastgut (z. B. in Form von Eisenkugeln) zugesetzt werden, die in bezug auf Agglomerate eine gewisse Mahlwirkung entfalten können und die Reibung zwischen den Eisenpulverteilchen verstärken. Dieses Ballastgut wird nach Durchlauf durch den Trommelofen 1 und Abtrennung vom Eisenpulver in einem Kreislauf wieder zum Eingang der Trommel 2 zurückgeführt oder wird innerhalb einer Ofenzone durch Barrikaden, die nur das Eisenpulver durchlassen, zurückgehalten. Wegen der erheblich größeren Teilchengröße im Vergleich zum Eisenpulver kann die Abtrennung sehr einfach und ohne großen Aufwand durchgeführt werden. Im Regelfall ist eine Ballastgutzugabe im Rahmen der Erfindung nicht notwendig.

Die Aufheizzone 5 geht in Transportrichtung des Eisenpulvers gesehen in die eigentliche Reduktionszone 7 über, in der ebenfalls die Pulverdurchmischung verstärkende Einbauten 6 vorgesehen sind. In den einzelnen Abschnitten der Trommel 2 können jeweils unterschiedliche Einbauten 6 zum Einsatz kommen. So eignen sich insbesondere Schnecken für den Eingangsbereich der Aufheizzone 5 und den Anfangsbereich der Reduktionszone 7, sowie Mischleisten für die Reduktionszone 7.

Dabei wird gerade in den Trommelofenbereichen mit den höheren Temperaturen nach Möglichkeit eine intensivere Eisenpulverdurchmischung bewirkt als in den niedriger temperierten Bereichen. In der Reduktionszone 7 wird das infolge der leichten Schrägstellung der sich ständig drehenden Trommel 2 langsam durch die Trommel 2 hindurch wandernde Eisenpulver einer reduzierenden Atmosphäre, insbesondere einer durch Zufuhr von Wasserstoffgas erzeugten Atmosphäre bei Ofentemperaturen von mindestens 800° Celsius ausgesetzt. Das frische Reduktionsgas wird unmittelbar, vorzugsweise gleichzeitig an verschiedenen in axialer Richtung der Trommel 2 voneinander beabstandeten Stellen in die Reduktionszone 7 eingeführt und ist möglichst im Gegenstrom zur Transportrichtung des Eisenpulvers gerichtet. Es sollte einen möglichst niedrigen Taupunkt, insbesondere einen Taupunkt unter -60°C aufweisen. Darüber hinaus sind vorzugsweise auch entsprechend mehrerer Ausgänge für den Brüdenabzug aus der Reduktionszone 7 vorgesehen. Auf diese Weise ist es in Verbindung mit der starken Durchmischung und Umwälzung der Eisenpulverschüttung möglich, die zu reduzierende Oxidhaut praktisch aller Eisenpulverteilchen mit einem Reduktionsgas mit vergleichsweise niedrigem Taupunkt in Kontakt zu bringen, obwohl durch die Reduktionsvorgänge mittels Wasserstoffgas ständig Wasserdampf entsteht.

Demgegenüber sind die Reduktionsbedingungen der herkömmlichen Eisenpulverreduktionsverfahren mit unbewegter Eisenpulverschüttung und Reduktionsgaszufuhr von der Austragsseite sowie Brüdenabzug von der Beschickungsseite des Glühofens von vornherein wesentlich weniger günstig.

Um eine gezielte Beeinflussung der Ofenatmosphäre und ggf. auch eine Verbesserung der Temperaturführung in der Trommel 2 zu ermöglichen, kann es zweckmäßig sein, im Innern der Trommel 2 Schottbleche anzuordnen, die den Behandlungsraum, insbesondere die Reduktionszone 7, in getrennt regelbare Abschnitte (z.B. zwei oder drei) aufteilen und so befestigt sind, daß sie an ihrem Umfang jeweils einen Spalt 21 zum Mantel der Trommel 2 hin belassen, durch den der Transport des Eisenpulvers in axialer Richtung beim Drehen der Trommel 2 möglich ist. Die Orte der Zu- bzw. Ableitung des Reduktionsgases bzw. der Brüden müssen jedenfalls in Abhängigkeit von der Durchflußleistung so entlang der Trommelachse verteilt sein, daß der Taupunkt der Ofenatmosphäre örtlich gezielt beeinflußt, also innerhalb vorteilhafter Grenzen gehalten werden kann. Die Begrenzung des Taupunktes nach unten ergibt sich aus wirtschaftlichen Gründen, da ein niedriger Taupunkt mit einem Anstieg des Reduktionsgasverbrauchs verbunden ist. In den Figuren sind die Reduktionsgaszu- und Brüdenabzugsleitungen nicht dargestellt worden. Zweckmässigerweise werden diese Leitungen im Bereich der Längsachse der Trommel 2 angeordnet. Der Verbrauch an Reduktionsgas kann bei Verwendung von Wasserstoff ohne weiteres auf Werte von 80 bis 100 Nm³ je t Eisenpulver beschränkt werden.

Die Ofentemperatur wird in der Reduktionszone 7, die im dargestellten Fall aufgrund der Stauwände 22 im Feuerraum 12 in zwei unterschiedlich stark beheizbare Bereiche aufgeteilt auf maximal 950° Celsius beschränkt. Bei unlegiertem oder niedriglegiertem Eisenpulver ist sogar eine Beschränkung auf maximal 900° Celsius vorteilhaft, während bei höherlegiertem Eisenpulver vorzugsweise die höheren Ofentemperaturen bis zu 950° Celsius angewandt werden. Damit liegt aber die Reduktionstemperatur beim erfindungsgemäßen Verfahren gegenüber der herkömmlichen Eisenpulverreduktion (ca. 900 bis 1200° C je nach Legierungsgrad des Pulvers) deutlich (d. h. um ca. 150 bis 250° C) tiefer.

In mechanischer Hinsicht wird der erfindungsgemäße Trommelofen so geregelt, daß die Verweilzeit des Eisenpulvers in der Reduktionszone deutlich unter einer Stunde liegt. Zweckmässige Verweilzeiten betragen 15 bis 20 Minuten. Auch in dieser Hinsicht unterscheidet sich das erfindungsgemäße Verfahren deutlich vom bisherigen Verfahren, bei dem Verweilzeiten von etwa 1 bis 2 Stunden angewendet werden. Durch diese verfahrenstechnischen Maßnahmen (relativ geringe Reduktionstemperatur, kurze Verweilzeit,intensive Pulverdurchmischung, niedriger Taupunkt der Ofenatmosphäre) gelingt es, die Bildung von Agglomeraten während des Reduktionsbetriebes weitestgehend zu vermeiden.

Hinter der Reduktionszone 7 schließt sich die Kühlzone 8 an, in der das reduzierte Eisenpulver auf unter 100° C indirekt abgekühlt wird. Der Wärmeentzug erfolgt unter Einsatz von z. B. Kühlwasser, das beispielsweise zu Heizzwecken außerhalb des Reduktionsglühverfahrens eingesetzt werden kann. Es ist aber auch möglich, die Abwärme teilweise zur Vorwärmung des eingesetzten Brennstoffs, der Verbrennungsluft und des eingesetzten Reduktionsgases zu verwenden.

Am Ende der Kühlzone 8 ist wiederum eine Schleuse 9 angeordnet, die die kontinuierliche Entnahme des reduzierten Eisenpulvers gestattet, ohne daß die Ofenatmosphäre im Innern der Trommel 2 beeinträchtigt wird. Eine an die Schleuse 9 angebaute Pulveraustragvorrichtung 10 gestattet die problemlose Abfüllung des Eisenpulvers in Transportbehälters.

Nachfolgend wird die Wirksamkeit des erfindungsgemäßen Verfahrens anhand eines in einem Versuchsofen durchgeführten Ausführungsbeispieles näher erläutert.

Eine Eisenschmelze mit folgender Zusammensetzung (Gewichts%) wurde in üblicher Weise durch Wasserverdüsung zerstäubt:
0,01 % C
0,03 % Si
Rest Eisen und übliche Verunreinigungen.

Das erzeugte Eisenpulver wies im wiesentlichen eine Korngröße im Bereich 30 - 400 um (mittlere Korngröße 90 um) auf und hatte einen Sauerstoffgehalt von ca. 0,9 - 1,1 %. Die Kornform war spratzig. Dieses Eisenpulver wurde nach Trocknung kontinuierlich in den Behandlungsraum eines indirekt beheizten Trommelofens gegeben. Der Durchmesser der Trommel (Behandlungsraum) betrug 300 mm. Das Eisenpulver füllte die Querschnittsfläche der Trommel etwa zu 5-15 % aus. Der beheizte Teil des Trommelofens (Aufheizzone und Reduktionszone) war in drei getrennt beheizbare Bereiche aufgeteilt. Die eingestellten Ofentemperaturen betrugen in Transportrichtung des Eisenpulvers gesehen 850° Celsius, 900° Celsius bzw. 950° Celsius. Die Trommelwand war im Innern im Bereich der Aufheizzone und der Reduktionszone mit Mischleisten ausgestattet.

Die Neigung der Trommelachse zum Auslaufende war so eingestellt, daß sich bei einer Trommeldrehzahl von etwa 1,6 U/min eine Verweilzeit in der Reduktionszone von etwa 30 min ergab. In der an die Reduktionszone des Trommelofens sich anschließenden Kühlzone wurde das Eisenpulver bis auf ca. 50° C abgekühlt. Als Reduktionsgas wurde Reinwasserstoff mit einem Taupunkt von etwa -60° C verwendet. Der Reduktionsgasverbrauch betrug etwa 90 Nm³ pro t Eisenpulver. Der Brennstoffverbrauch lag bei etwa 65 Nm³ Erdgas pro t Eisenpulver. Der Ofenbetrieb verlief störungsfrei. Das reduzierte Eisenpulver wies einen Restsauerstoffgehalt von weniger als 0,17 % auf. Die Pulverstruktur entsprach praktisch völlig der ursprünglichen Körnung. Es waren lediglich geringe Mengen an Agglomeraten gebildet worden. Diese blieben unter einer Maximalgröße von ca. 20 mm und ließen sich jeweils bereits durch Zerreiben von Hand wieder in die Primärkörnung aus der Wasserverdüsung zerlegen. Auch im Innern dieser kleinen Agglomerate war der Reduktionsglüherfolg ohne Einschränkung eingetreten. Das so hergestellte Pulver ließ sich sehr gut zu Preßkörpern verpressen.

Das erfindungsgemäße Glühverfahren bringt eine Reihe wichtiger Vorteile mit sich. So kann die erforderliche Verweilzeit des Eisenpulvers im Reduktionsofen gegenüber der herkömmlichen Glühung z.B. in einem Bandofen bei gleichem Anfangs- und Endsauerstoffgehalt auf etwa 1/3 des früheren Wertes reduziert werden. Dadurch ergeben sich hohe Durchsatzleistungen bei vergleichsweise geringem Anlagenaufwand. Weiterhin verringert die kürzere Verweilzeit den spezifischen Brennstoffverbrauch erheblich, und zwar etwa auf die Hälfte des früheren Wertes. Außerdem läßt sich der Verbrauch an Reduktionsgas deutlich absenken. Insgesamt ergibt sich dadurch eine erhebliche Produktionskostenersparnis.

Wegen der niedrigeren Reduktionstemperatur ist der sonst bei der herkömmlichen Glühbehandlung stets festzustellende Effekt einer Verfrittung von Primärpulverteilchen zu größeren Agglomeraten kaum noch feststellbar, zumindest aber lassen sich die eventuell gebildeten Agglomerate bereits durch geringe Krafteinwirkung wieder in die ursprünglichen Primärteilchen zerlegen, ohne deren Struktur zu zerstören. Nach einer herkömmlichen Glühbehandlung war stets eine anschließende Mahlbehandlung erforderlich, die neben dem Kostenaufwand auch den Nachteil hatte, daß sie zu Eisenpulverteilchen führte, die eine andere Teilchenstruktur als die Primärteilchen aufwiesen. Dagegen liefert das erfindungsgemäße Verfahren ein Pulver, dessen Siebkennlinien nahezu vollständig derjenigen des ursprünglichen Rohpulvers entspricht.

Überraschenderweise wird bei dem erfindungsgemäßen Verfahren durch den Gasaustausch der Ofenatmosphäre praktisch kein Eisenstaub ausgetragen, obwohl das behandelte Eisenpulver sehr feinkörnig ist. Ein weiterer wesentlicher Vorteil ist darin zu sehen, daß das erfindungsgemäße Verfahren einen voll kontinuierlichen und vollständig automatisierbaren Betrieb zwischen dem Materialvorratsbunker und dem Abtransport in Transportbehältern gestattet, wobei ein vollständiger Atmosphärenabschluß gewährleistet ist. Die bisher zum Transport des Eisenpulvers erforderliche Schalenwirtschaft bei Rollenherd- oder Hubbalkenöfen bzw. der Bedarf an Transportbändern bei Bandöfen entfällt völlig, so daß durch die Erfindung erheblicher Handhabungs- und Reparaturaufwand eingespart wird. Durch die hohe Effektivität des Verfahrens ist der Platzbedarf für eine erfindungsgemäße Anlage bezogen auf die Durchsatzleistung erheblich geringer als bisher. Durch die ständige Bewegung der Pulverschüttung während der Glühbehandlung wird eine außerordentlich homogene Produktqualität auf einem gleichbleibend hohen Niveau ermöglicht.

Im Vergleich zu herkömmlichen Glühöfen läßt sich der Prozeß an einem Trommelofen leichter und gezielter beeinflussen. Da der Anlagenverschleiß nicht zuletzt wegen der deutlich verringerten Reduktionstemperaturen und des völligen Wegfalls besonders verschleißanfälliger Teile wesentlich vermindert ist, resultiert daraus eine deutlich höhere Verfügbarkeit der Gesamtanlage bei gleichzeitig drastisch reduziertem Wartungs- und Reparaturaufwand.

## Patentansprüche

1. Verfahren zur kontinuierlichen Reduktion und Weichglühung von wasserverdüstem Eisenpulver, dessen Pulverteilchen zumindest teilweise mit einer Oxidhaut überzogen sind und das in Form einer losen Pulverschüttung durch einen indirekt beheizten Behandlungsraum mit einer Aufheiz-, einer Reduktions- und einer Kühlzone hindurchgeführt wird, wobei im Behandlungsraum durch ständige Zufuhr von Reduktionsgas und durch eine Ableitung gebildeter Reduktionsprodukte wie Wasserdampf und Kohlendioxid (Brüden) eine reduzierende Atmosphäre aufrechterhalten wird, dadurch gekennzeichnet,
daß die Pulverschüttung während des Durchlaufs durch den Behandlungsraum unter ständiger Durchmischung zumindest in der Reduktionszone umgewälzt wird, daß die Ofentemperatur in der Reduktionszone in einem Bereich von 800 bis 950°C gehalten wird und daß zur Steuerung des Taupunktes der Ofenatmosphäre unmittelbar in die Reduktionszone permanent frisches Reduktionsgas eingeführt wird.

2. Verfahren nach Anspruch 1,
dadurch gekennzeichnet,
daß die Brüden von mindestens einer Stelle innerhalb der Reduktionszone unmittelbar nach außen abgeführt werden.

3. Verfahren nach einem der Ansprüche 1 oder 2,
dadurch gekennzeichnet,
daß die Reduktionsgaszufuhr in die Reduktionszone an mehreren in axialer Richtung voneinander beabstandeten Stellen erfolgt.

4. Verfahren nach Anspruch 1 bis 3,
dadurch gekennzeichnet,
daß die Umwälzung und Durchmischung der Eisenpulverschüttung durch Drehung der Wandung des Behandlungsraumes bewirkt wird.

5. Verfahren nach einem der Ansprüche 1 bis 4,
dadurch gekennzeichnet,
daß daß die Ofentemperatur in der Reduktionszone bei der Behandlung niedrig legierter Eisenpulver unter 900°C gehalten wird.

6. Verfahren nach einem der Ansprüche 1 bis 5,
dadurch gekennzeichnet,
daß der Taupunkt des in die Reduktionszone eingeführten Reduktionsgases auf oder unter -60° Celsius liegt.

7. Verfahren nach einem der Ansprüche 1 bis 6,
dadurch gekennzeichnet,
daß die Durchmischung des Eisenpulvers im Bereich des Endes der Aufheizzone und mindestens des Anfangs der Reduktionszone im Vergleich zum übrigen Teil des Behandlungsraumes verstärkt durchgeführt wird.

8. Verfahren nach einem der Ansprüche 1 bis 7,
dadurch gekennzeichnet,
daß die Durchmischung des Eisenpulvers durch von der Drehung der Wandung des Behandlungsraumes unabhängige Mischgeräte bewirkt wird.

9. Verfahren nach einem der Ansprüche 1 bis 8,
dadurch gekennzeichnet,
daß die Reibung zwischen den Eisenpulverteilchen bei der Umwälzung und/oder Durchmischung durch zugesetztes stückiges Ballastgut (z.B. in Form von Eisenkugeln) verstärkt wird.

10. Verfahren nach einem der Ansprüche 1 bis 8,
dadurch gekennzeichnet,
daß Wasserstoff als Reduktionsgas verwendet und seine Zufuhr je t Eisenpulver auf etwa 80 bis 100 Nm³ beschränkt wird.

11. Verfahren nach einem der Ansprüche 1 bis 10,
dadurch gekennzeichnet,
daß die Verweitzeit des Eisenpulvers in der Reduktionszone etwa 15 bis 20 min beträgt.

12. Anlage zur Durchführung des Verfahrens nach einem der Ansprüche 1 bis 11 mit einem Trommelofen (1) mit indirekter Beheizung, dessen Behandlungsraum (Trommel 2) in drei Zonen unterteilt ist, deren erste als Aufheizzone (5) am Beschickungsende des Trummelofens (1), deren zweite als Reduktionszone (7) im mittleren Teil des Trommelofens (1) und deren dritte als Kühlzone (8) am Austragende des Trommelofens (1) angeordnet ist, und mit einer Reduktionsgaszuleitung und einer Brüdenabfuhrleitung verbunden ist, wobei in der Reduktionszone (7) mindestens eine Eintrittsöffnung für die Zuleitung frischen Reduktionsgases angeordnet ist und mindestens in der Reduktionszone (7) Einbauten (6) vorgesehen sind, die unabhängig von der Wand der Trommel (2) bewegbar sind und das Eisenpulver zusätzlich zu der durch die Drehung der Trommel (2) eintretenden Umwälzung durchmischen.

13. Anlage nach Anspruch 12,
dadurch gekennzeichnet,
daß mindestens ein Teil der Einbauten (6) als von der Wand der Trommel (2) unabhängig drehbare Mischleistenkörbe (20) ausgebildet ist.

14. Anlage nach einen der Ansprüche 12 bis 13,
dadurch gekennzeichnet,
daß im Eingangsbereich der Aufheizzone (5) eine Schnecke als die Durchmischung verstärkender Einbau (6) vorgesehen ist.

15. Anlage nach einem der Ansprüche 13 bis 14,
dadurch gekennzeichnet,
daß die Einbauten (6) separat antreibbar sind.

16. Anlage nach Anspruch 15,
dadurch gekennzeichnet,
daß die Einbauten (6) entgegen der Drehrichtung der Trommel (2) antreibbar sind.

17. Anlage nach einem der Ansprüche 12 bis 16,
dadurch gekennzeichnet,
daß außen an der Wand der Trommel (2) eine oder mehrere Klopfeinrichtungen zum Ablösen etwaiger Anbackungen von der Innenoberfläche der Wand vorgesehen sind.

18. Anlage nach einem der Ansprüche 12 bis 17,
dadurch gekennzeichnet,
daß im Bereich der Aufheizzone (5) eine siebartige Zwischenschicht an der Innenseite der Trommel (2) angeordnet ist.

19. Anlage nach Anspruch 18,
dadurch gekennzeichnet,
daß die siebartige Zwischenschicht als Siebkorb (25) ausgebildet ist.

20. Anlage nach Anspruch 19,
dadurch gekennzeichnet,
daß der Siebkorb (25) über ein aus der Trommel (2) herausgeführtes Gestänge (26) an eine Schwing- oder Rütteleinrichtung (27) angeschlossen ist.

21. Anlage nach einem der Ansprüche 12 bis 20,
dadurch gekennzeichnet,
daß innerhalb der Reduktionszone (7) mehrere in Längsrichtung des Trommelofens (1) voneinander beabstandete Eintrittsöffnungen für die Zuleitung frischen Reduktionsgases vorgesehen sind.

22. Anlage nach einem der Ansprüche 12 bis 21,
dadurch gekennzeichnet,
daß mindestens eine innerhalb der Reduktionszone (7) beginnende Brüdenabzugsleitung für die unmittelbare Ableitung der Brüder nach außen vorgesehen ist.

23. Anlage nach Anspruch 22,
dadurch gekennzeichnet,
daß mehrere in längsrichtung des Trommelofens (1) voneinander beabstandete Austrittsöffnungen für die unmittelbare Ableitung der Brüden aus der Reduktionszone (7) nach außen vorgesehen sind.

24. Anlage nach einem der Ansprüche 12 bis 23,
dadurch gekennzeichnet,
daß die Reduktionszone (7) durch quer zur längsachse der Trommel (2) unter Belassung eines Durchtrittsspaltes (21) für die Eisenpulverschüllung eingebaute Schottbleche in bezüglich Temperatur- und/oder Atmosphärenführung getrennt regelbare Abschnitte aufgeteilt ist.

25. Anlage nach Anspruch 24,
dadurch gekennzeichnet,
daß die Reduktionszone (7) in mindestens drei Abschnitte Aufgeteilt ist.

26. Anlage nach einem der Ansprüche 12 bis 25,
dadurch gekennzeichnet,
daß die Längsachse des Trommelofens (1) geneigt und in ihrer Neigung verstellbar ist.

27. Verwendung eines indirekt beheizten Trommelofens für die kontinuierliche Reduktionsglühung von in Form einer losen Pulverschüttung vorliegendem wasserverdüstem Eisenpulver, das nicht mit pulverförmigen oder flüssigen Zusatzstoffen vermischt ist.

## Claims

1. A process for the continuous reduction and soft annealing of water-atomized iron powder, whose powder particles are at least partially coated with an oxide skin and which is conveyed in the form of a loose powder charge through an indirectly heated treatment chamber with a heating zone, a reduction zone and a cooling zone, a reducing atmosphere being maintained in the treatment chamber by constant supply of reduction gas and by removal of reduction products formed, such as water vapour and carbon dioxide (vapour), characterized in that, while passing through the treatment chamber, the powder charge is circulated under constant thorough mixing at least in the reduction zone, in that the furnace temperature in the reduction zone is kept in a range of from 800 to 950°C and in that, to control the dew point of the furnace atmosphere, permanently fresh reduction gas is fed directly into the reduction zone.

2. A process according to claim 1, characterized in that the vapours are conveyed directly outwards from at least one point inside the reduction zone.

3. A process according to either one of claims 1 or 2, characterized in that the reduction gas supply into the reduction zone is effected at a plurality of points spaced from each other in the axial direction.

4. A process according to any one of claims 1 to 3, characterized in that the circulation and thorough mixing of the iron powder charge is effected by rotation of the walls of the treatment chamber.

5. A process according to any one of claims 1 to 4, characterized in that the furnace temperature in the reduction zone is kept below 900°C during treatment of low-alloy iron powder.

6. A process according to any one of claims 1 to 5, characterized in that the dew point of the reduction gas fed into the reduction zone lies at or below -60° Celsius.

7. A process according to any one of claims 1 to 6, characterized in that the thorough mixing of the iron powder is effected more intensely in the area of the end of the heating zone and at least the beginning of the reduction zone than in the remaining part of the treatment chamber.

8. A process according to any one of claims 1 to 7, characterized in that the thorough mixing of the iron powder is effected by mixing devices independent of the rotation of the walls of the treatment chamber.

9. A process according to any one of claims 1 to 8, characterized in that the friction between the iron powder particles during circulation and/or thorough mixing is reinforced by added lumpy ballast (e.g. in the form of iron balls).

10. A process according to any one of claims 1 to 8, characterized in that hydrogen is used as the reduction gas and its supply is restricted to approximately 80 to 100 Nm³ per tonne of iron powder.

11. A process according to any one of claims 1 to 10, characterized in that the residence time of the iron powder in the reduction zone amounts to approximately 15 to 20 mins.

12. An installation for carrying out the process according to any one of claims 1 to 11, comprising a drum-type furnace (1) with indirect heating, whose treatment chamber (drum 2) is subdivided into three zones, the first of which is arranged as a heating zone (5) at the feed end of the drum-type furnace (1), the second of which is arranged as a reduction zone (7) in the central part of the drum-type furnace (1) and the third of which is arranged as a cooling zone (8) at the discharge end of the drum-type furnace (1), and whose treatment chamber (drum 2) is connected with a reduction gas supply line and a vapour discharge line, at least one inlet opening for the supply of fresh reduction gas being arranged in the reduction zone (7) and baffles (6) being provided at least in the reduction zone (7), which baffles (6) may be moved independently of the wall of the drum (2) and thoroughly mix the iron powder in addition to the circulation occurring through the rotation of the drum (2).

13. An installation according to claim 12, characterized in that at least some of the baffles (6) are constructed as mixing strip baskets (20) rotatable independently of the wall of the drum (2).

14. An installation according to either one of claims 12 and 13, characterized in that a screw is provided in the inlet area of the heating zone (5) as the baffle (6) increasing thorough mixing.

15. An installation according to either one of claims 13 and 14, characterized in that the baffles (6) may be driven separately.

16. An installation according to claim 15, characterized in that the baffles (6) may be driven contrary to the direction of rotation of the drum (2).

17. An installation according to any one of claims 12 to 16, characterized in that one or more knocking devices are provided externally on the wall of the drum (2) to detach any caked-on elements from the inner surface of the wall.

18. An installation according to any one of claims 12 to 17, characterized in that a sieve-type intermediate layer is arranged in the area of the heating zone (5) on the inside of the drum (2).

19. An installation according to claim 18, characterized in that the sieve-type intermediate layer is constructed as a perforated basket (25).

20. An installation according to claim 19, characterized in that the perforated basket (25) is connected to an oscillating or vibrating device (27) via a connecting rod (26) extending out of the drum (2).

21. An installation according to any one of claims 12 to 20, characterized in that a plurality of inlet openings spaced from each other in the longitudinal direction of the drum-type furnace (1) are provided inside the reduction zone (7) for the supply of fresh reduction gas.

22. An installation according to any one of claims 12 to 21, characterized in that at least one vapour discharge line starting inside the reduction zone (7) is provided for direct external discharge of the vapours.

23. An installation according to claim 22, characterized in that a plurality of outlet openings spaced from each other in the longitudinal direction of the drum-type furnace (1) are provided for direct external discharge of the vapours out of the reduction zone (7).

24. An installation according to any one of claims 12 to 23, characterized in that the reduction zone (7) is divided into sections separately controllable with respect to temperature and/or atmosphere management by bulkhead sheets built in in transverse relation to the longitudinal axis of the drum (2), a gap (21) being left for passage of the iron powder charge.

25. An installation according to claim 24, characterized in that the reduction zone (7) is divided into at least three sections.

26. An installation according to any one of claims 12 to 25, characterized in that the longitudinal axis of the drum furnace (1) is inclined and adjustable with respect to its inclination.

27. Use of an indirectly heated drum-type furnace for continuous reduction annealing of water-atomized iron powder present in the form of a loose powder charge, which iron powder is not mixed with powdery or liquid additives.

## Revendications

1. Procédé pour la réduction et le recuit de coalescence continus de poudre de fer obtenue par atomisation aqueuse, dont les particules de poudre sont revêtues au moins partiellement d'une couche d'oxyde et qui est guidée, sous forme de poudre en vrac, à travers un espace de traitement chauffé indirectement comportant une zone de chauffage, une zone de réduction, et une zone de refroidissement, une atmosphère réductrice étant maintenue dans l'espace de traitement par amenée continue de gaz réducteur et par une dérivation des produits de réduction formés, comme de la vapeur d'eau et du dioxyde de carbone (fumées ou buées), caractérisé en ce que la poudre en vrac, pendant le passage à travers l'espace de traitement, est agitée par mélangeage continu au moins dans la zone de réduction, en ce que la température du four dans la zone de réduction est maintenue dans une plage de 800 à 950°C, et en ce que, pour commander le point de rosée de l'atmosphère du four, du gaz réducteur frais est introduit de façon permanente directement dans la zone de réduction.

2. Procédé selon la revendication 1,
caractérisé en ce que les fumées ou buées sont évacuées directement vers l'extérieur à partir d'au moins un endroit à l'intérieur de la zone de réduction.

3. Procédé selon une des revendications 1 ou 2,
caractérisé en ce que l'amenée du gaz réducteur dans la zone de réduction est effectuée en plusieurs endroits écartés l'un de l'autre en direction axiale.

4. Procédé selon les revendications 1 à 3,
caractérisé en ce que l'agitation et le mélangeage de la poudre de fer en vrac sont obtenus par rotation de la paroi de l'espace de traitement.

5. Procédé selon l'une des revendications 1 à 4,
caractérisé en ce que la température du four dans la zone de réduction, lors du traitement d'une poudre de fer faiblement alliée, est maintenue au-dessous de 900°C.

6. Procédé selon l'une des revendications 1 à 5,
caractérisé en ce que le point de rosée du gaz réducteur introduit dans la zone de réduction vaut -60°C ou au-dessous.

7. Procédé selon une des revendications 1 à 6,
caractérisé en ce que le mélangeage de la poudre de fer dans la zone de l'extrémité de la zone de chauffage et au moins du début de la zone de réduction est effectué de façon renforcée par rapport à la partie restante de l'espace de traitement.

8. Procédé selon une des revendications 1 à 7,
caractérisé en ce que le mélangeage de la poudre de fer est effectué par des mélangeurs indépendants de la rotation de la paroi de l'espace de traitement.

9. Procédé selon une des revendications 1 à 8,
caractérisé en ce que le frottement entre les particules de poudre de fer lors de l'agitation et/ou du mélangeage est renforcé par de la matière de ballastage en morceaux ajoutée (par exemple sous forme de billes de fer).

10. Procédé selon une des revendications 1 à 8,
caractérisé en ce que de l'hydrogène est utilisé comme gaz réducteur et son amenée par tonne de poudre de fer est limitée à environ 80 à 100 Nm³.

11. Procédé selon une des revendications 1 à 10,
caractérisé en ce que le temps de séjour de la poudre de fer dans la zone de réduction vaut d'environ 15 à 20 minutes.

12. Installation pour la mise en oeuvre du procédé selon une des revendications 1 à 11, comportant un four tournant (1) à chauffage indirect, dont l'espace de traitement (tambour 2) est subdivisé en trois zones, dont la première, en tant que zone de chauffage (5), est agencée à l'extrémité de chargement du four tournant (1), dont la deuxième, en tant que zone de réduction (7), est agencée dans la partie centrale du four tournant (1) et dont la troisième, en tant que zone de refroidissement (8), est agencée à l'extrémité de sortie du four tournant (1), et est relié à une conduite de gaz réducteur et une conduite d'évacuation des fumées, au moins une ouverture d'entrée pour l'amenée de gaz réducteur frais étant agencée dans la zone de réduction (7) et, au moins dans la zone de réduction (7), des pièces (6) étant prévues qui sont déplaçables indépendamment de la paroi du tambour (2) et mélangent la poudre de fer en plus de l'agitation provoquée par la rotation du tambour (2).

13. Installation selon la revendication 12,
caractérisée en ce qu'au moins une partie des pièces (6) est réalisée sous forme de barrettes de mélange (20) pouvant tourner indépendamment de la paroi du tambour (2).

14. Installation selon une des revendications 12 à 13,
caractérisée en ce que, dans la zone d'entrée de la zone de chauffage (5), il est prévu une vis sans fin formant la pièce (6) renforçant le mélangeage.

15. Installation selon une des revendications 13 à 14,
caractérisée en ce que les pièces (6) peuvent être entraînées de façon séparée.

16. Installation selon la revendication 15,
caractérisée en ce que les pièces (6) peuvent être entraînées à l'encontre du sens de rotation du tambour (2).

17. Installation selon une des revendications 12 à 16,
caractérisée en ce que, extérieurement, sur la paroi du tambour (2), sont prévus un ou plusieurs dispositifs de frappe pour détacher des particules collées quelconques de la surface interne de la paroi.

18. Installation selon une des revendications 12 à 17,
caractérisée en ce que, dans la zone de la zone de chauffage (5), il est agencé une couche intermédiaire du type tamis sur la face interne du tambour (2).

19. Installation selon la revendication 18,
caractérisée en ce que la couche intermédiaire du type tamis est réalisée sous forme de panier de tamisage (25).

20. Installation selon la revendication 19,
caractérisée en ce que le panier de tamisage (25) est raccordé, par l'intermédiaire d'une barre (26) sortant du tambour (2), à un dispositif oscillant ou vibrant (27).

21. Installation selon une des revendications 12 à 20,
caractérisée en ce que, à l'intérieur de la zone de réduction (7), plusieurs ouvertures d'entrée, écartées l'une de l'autre en direction longitudinale du four tournant (1), sont prévues pour l'amenée de gaz réducteur frais.

22. Installation selon une des revendications 12 à 21,
caractérisée en ce qu'au moins un conduit d'évacuation des fumées commençant à l'intérieur de la zone de réduction (7) est prévu pour l'évacuation directe des fumées vers l'extérieur.

23. Installation selon la revendication 22,
caractérisée en ce que plusieurs ouvertures de sortie, écartées l'une de l'autre en direction longitudinale du four tournant (1), sont prévues pour l'évacuation directe des fumées de la zone de réduction (7) vers l'extérieur.

24. Installation selon une des revendications 12 à 23,
caractérisée en ce que la zone de réduction (7) est subdivisée en tronçons réglables de façon séparée en ce qui concerne la commande de la température et/ou de l'atmosphère, par des cloisons étanches montées transversalement à l'axe longitudinal du tambour (2) en laissant une fente de passage (21) pour la poudre de fer en vrac.

25. Installation selon la revendication 24,
caractérisée en ce que la zone de réduction (7) est subdivisée en au moins trois tronçons.

26. Installation selon une des revendications 12 à 25,
caractérisée en ce que l'axe longitudinal du four tournant (1) est incliné et son inclinaison est réglable.

27. Utilisation d'un four tournant chauffé indirectement pour le recuit réducteur continu de poudre de fer obtenue par atomisation aqueuse et existant sous forme de poudre en vrac, qui n'est pas mélangée avec des additifs pulvérulents ou liquides.
